# EUROPÄISCHE PATENTSCHRIFT

(11) **EP 0 681 339 B1**
(45) Veröffentlichungstag und Bekanntmachung des Hinweises auf die Patenterteilung: **29.01.2003**
(21) Anmeldenummer: 95106006.0
(22) Anmeldetag: 21.04.1995
(51) Int. Cl.: H01M 4/86, H01M 8/08, H01M 4/90, H01M 4/94, C25B 13/08

(54) **Elektrochemische Zelle**
Electrochemical cell
Cellule électrochimique

(30) Priorität: 04.05.1994 DE 4415678
(43) Veröffentlichungstag der Anmeldung: 08.11.1995
(73) Patentinhaber: Celanese Ventures GmbH, 65926 Frankfurt am Main (DE)
(72) Erfinder: Tetzlaff, Karl-Heinz, D-65779 Kelkheim (DE); Walz, Rüdiger, Dr., D-65779 Kelkheim (DE); Helmer-Metzmann, Freddy, Dr., D-55270 Essenhaim (DE)

(56) Entgegenhaltungen:
- EP-A- 0 546 594
- EP-A- 0 582 333
- DE-A- 4 312 126
- US-A- 3 930 094
- US-A- 4 847 173

## Beschreibung

Gegenstand der Erfindung ist eine elektrochemische Zelle gemäß dem Hauptanspruch 1. Die Unteransprüche stellen bevorgugte Gestaltungen der Erfindung dar.

Die Vorrichtung ist sowohl für gaserzeugende Elektrolyseprozesse, wie beispielsweise die Wasser-Elektrolyse oder Alkalichlorid-Elektrolyse, als auch für gasverbrauchende Umkehrprozesse, wie beispielsweise die Stromerzeugung aus Wasserstoff und Sauerstoff mit Brennstoffzellen geeignet.

Unter Diffusionselektroden, die in der Literatur oft als Gasdiffusionselektroden bezeichnet werden, sollen Elektroden mit poröser Struktur verstanden werden, deren Porensystem zum Teil vom Gas und zum Teil von einem ionenleitenden Medium durchdrungen wird. Häufig werden diese Diffusionselektroden aus einem körnigen Material, das einen elektrochemischen Katalysator enthält, hergestellt. Zur Einstellung der Benetzungseigenschaften und als Bindemittel wird Kunststoff, beispielsweise Polytetrafluorethylen zugemischt.

Bei einer bekannten elektrochemischen Zelle werden die Diffusionselektroden von der Vorderseite direkt oder über ein Diaphragma von einem flüssigen Elektrolyten benetzt und das Reaktionsgas wird von der Rückseite zu- bzw. abgeführt. Bei dieser Vorrichtung können die Katalysatorpartikel der Diffusionselektrode durch Erosion von dem strömenden Elektrolyten abgetragen werden oder gelangen in gelöster Form in den Elektrolyten, wie das von einigen silberhaltigen Diffusionselektroden bei bestimmten Potentialen bekannt ist.

Andere bekannte elektrochemische Zellen benutzen alleine einen festen (immobilen) Elektrolyt zwischen den Diffusionselektroden, wie beispielsweise eine Ionenaustauschermembran. Bei diesen Zellen ist es sehr schwierig den Wasserhaushalt und die Wärmeströme zu beherrschen. Auch die hohen dynamischen Anforderungen, wie sie beispielsweise an Wasserelektrolysezellen oder an Brennstoffzellen für Automobile gestellt werden, können mit diesen Zellen nicht befriedigend beherrscht werden.

Die Aufgabe der Erfindung besteht darin, sowohl die Merkmale der elektrochemischen Zellen mit flüssigem (mobilen) Elektrolyt als auch die Merkmale der elektrochemischen Zellen mit festen (immobilen) Elektrolyt zu nutzen, ohne deren Nachteile inkaufnehmen zu müssen.

Es wird daher eine elektrochemische Zelle der eingangs genannten Art vorgeschlagen, wobei zwischen den Diffusionselektroden mindestens eine Ionenaustauschermembran unmittelbar vor mundestens einer der Diffusionselektroden angeordnet ist.

Als flüssiger Elektrolyt kann eine Salzlösung, eine Säure oder eine Base verwendet werden. Als Ionenaustauschermembran kann sowohl eine Kationenaustauschermembran als auch eine Anionenaustauschermembran eingesetzt werden. Dabei kann auch eine Kationenaustauschermembran zum Transport von Anionen eingesetzt werden, wenn es sich um starke Elektrolyte handelt, wie beispielsweise beim Transport von OH⁻-Ionen in einer alkalischen Brennstoffzelle. Die Eigenschaften einer derartigen Anordnung werden im Beispiel weiter unten näher beschrieben.

Gemäß der Erfindung ist es vorteilhaft, wenn die Ionenaustauschermembran unmittelbar vor einer Diffusionselektrode angeordnet ist. Das kann dadurch geschehen, daß die Ionenaustauschermembran fest mit der Diffusionselektrode verbunden ist. Der feste Verbund kann beispielsweise durch Aufpressen oder Aufwalzen erreicht werden. Dieser Vorgang kann durch teilweises Aufschmelzen oder Anlösen der Ionenaustauschermembran unterstützt werden. Bei ausreichend niederviskoser Einstellung einer Ionenaustauscher enthaltenden Lösung oder einer lonenaustauscher-Schmelze, kann man die Diffusionselektrode auch mit an sich bekannten Methoden beschichten. Dabei kann der Elektrokatalysator bzw. die den Katalysator enthaltenden Partikel ganz oder teilweise im Ionenaustauscher eingebettet sein. Man kann auch die Katalysator enthaltenden Partikel mit an sich bekannten Methoden zunächst mit einer dünnen Ionenaustauscherschicht umhüllen und aus diesen Partikeln eine Diffusionselektrode herstellen. Dabei ist auf eine ausreichende elektrischen Leitfähigkeit der Partikel untereinander zu achten.

Als besonders vorteilhaft hat sich erwiesen, wenn die Ionenaustauschermembran mit einer Sauerstoff verzehrenden Kathode verbunden ist, insbesondere wenn die Kathode als Elektrokatalysator Silber enthält. Derartige Kathoden können in alkalischen Brennstoffzellen oder Elektrolyseprozessen wie die Alkalichlorid-Elektrolyse eingesetzt werden. Entgegen der allgemeinen Lehrmeinung können für diesen Fall auch die Kationenaustauschermembranen des Anspruchs 1 eingesetzt werden, die eine bessere Stabilität gegen Laugen haben als Anionenaustauschermembranen.

In der erfindungsgemäßen elektrochemischen Zelle kann sowohl vor der Anode als auch vor der Kathode eine Ionenaustauschermembran angeordnet sein.

Als besonders geeignete Ionenaustauschermembran hat sich eine Membran aus sulfoniertem Polyetheretherketon erwiesen, weil dieser Werkstoff sich leicht in handelsüblichen Lösungsmitteln löst und daher leicht verarbeitbar ist. Zur Verbesserung der Stabilität können auch homogene Blends aus sulfoniertem Polyetheretherketon und Polysulfon eingesetzt werden.

Die erfindungsgemäße elektrochemische Zelle weist eine Reihe von vorteilhaften Eigenschaften auf, die für Brennstoffzellen und für die Wasserelektrolyse bedeutsam sind:
Der Wärmeaustausch kann durch einen Elektrolytkreislauf über Wärmeaustauscher in einfacher Weise und reaktionsschnell stabilisiert werden.
Der Abtransport von Reaktionswasser bei der Brennstoffzelle und der Abtransport von Wasser bei der Wasser-Elektrolyse erfolgt in einfacher Weise über den flüssigen Elektrolyten und muß nicht, wie bei bekannten Membranzellen, über die Gasphase herbei- bzw abgeführt werden.
Durch den flüssigen Elektrolyten kann der Wasserhaushalt der Ionenaustauschermembran besser stabilisiert werden als bei der bekannten Membranzelle, bei der der Wasserhaushalt über die Gasphase eingestellt werden muß.
Durch den Verbund von Diffusionselektrode und Ionenaustauschermembran kann der Katalysator praktisch nicht mehr in den Elektrolyten gelangen.
Bei gasbildenden Reaktionen, wie der Wasser-Elektrolyse wird eine Gasentwicklung an der Vorderseite der Elektroden zuverlässig verhindert.
Durch den Verbund von Diffusionselektrode und Ionenaustauschermembran wird ein Gasdurchbruch zuverlässig verhindert. Damit wird die Sicherheit beim Betrieb von elektrochemischen Zellen wesentlich erhöht.

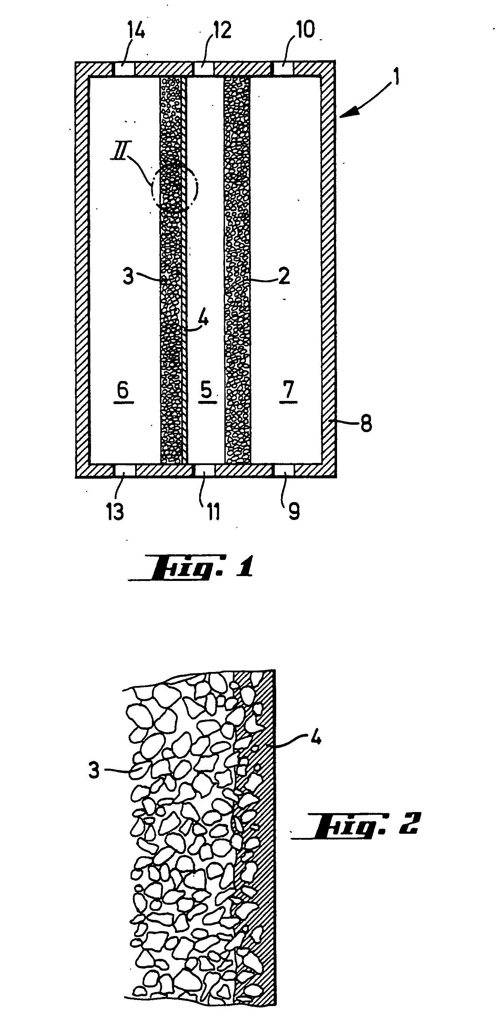

Die Erfindung wird anhand der Figuren 1 bis 2 beispielsweise beschrieben:
- Fig. 1: zeigt eine elektrochemische Zelle geschnitten
- Fig. 2: zeigt einen Ausschnitt einer Diffusionselektrode mit Ionenaustauschermembran

Eine elektrochemische Zelle 1, beispielsweise eine Brennstoffzelle, enthält zwei Diffusionselektroden 2 und 3. Die Diffusionselektrode 3 trägt eine Ionenaustauschermembran 4. Fig. 2 zeigt einen Ausschnitt von Diffusionselektrode 3 und Ionenaustauschermembran 4.

Die Ionenaustauschermembran 4 kann ein an sich bekannter Polymerwerkstoff gemäß Anspruch 1 sein. Es ist vorteilhaft Diffusionselektrode 3 und Ionenaustauschermembran 4 innig miteinander zu verbinden. Dies kann durch an sich bekannte Beschichtungsmethoden erfolgen wie Heißpressen von Diffusionselektrode und Ionenaustauschermembran oder durch Lösen der Ionenaustauschermembran 4 in einem Lösungsmittel und Beschichten der Diffusionselektrode 3 mit dieser Lösung. In einer elektrochemischen Zelle können auch beide Diffusionselektroden mit einer Ionenaustauschermembran beschichtet sein. Zwischen den Diffusionselektroden ist ein Raum 5 für den Elektrolyt angeordnet. Vorzugsweise wird ein flüssiger Elektrolyt vorgesehen, der durch die Öffnungen 11 und 12 mit einem externen Kreislauf zum Zweck des Stoff- und Wärmeaustauschs verbunden ist. Als Elektrolyt sind besonders starke Laugen oder Säuren geeignet.

Hinter der Diffusionselektrode 2 befindet sich ein Raum 7, der zur Gasaufnahme oder zur Gasabgabe vorgesehen ist. Die Gase können durch die Öffnungen 9 und 10 zugeführt oder abgeführt werden. Die Diffusionselektrode 3 hat in analoger Weise einen rückwärtigen Raum 6 und Öffnungen 13 und 14 im Gehäuse 8.

### Beispiel:

Auf eine silberhaltige Diffusionskathode, deren Herstellung in der Deutschen Offenlegungsschrift DE 3303779 A1, beschrieben ist, wurde mit einer Rakel eine Lösung in einer Schicht von 20 µm aufgetragen, die aus dem Lösemittel N-methylpyrrolidon (NMP) bestand, das ca. 20 Gew.-% eines kationenleitenden Polymers der Zusammensetzung: 60 % sulfoniertes Polyetheretherketon (Sulfonierungsgrad 70 % der o-Phenyl-o-Einheit) und 40 % Polysulfon (®Ultrason) enthielt. Der so erhaltene Sandwich wurde im Trockenschrank unter 100 mbar (absolut) bei 80°C für 24 Stunden getrocknet. Der erhaltene Polymerfilm mit einer Dicke von ca. 10 bis 20 µm haftete auf der Elektrode in homogener Schicht.

Die beschichtete Diffusionselektrode wurde in einer Halbzellen-Anordnung mit einer aktiven Elektrodenfläche von 2,25 m² untersucht. Als Vergleichselektrode diente eine wasserstoffentwickelnde-Raneynickel-Kathode. Die Diffusionselektrode wurde über eine Luggin-Kapillare mit 0,8 mm Durchmesser, die im Abstand von 1,06 mm zur Diffusionselektrode angeordnet war, mit reinem Sauerstoff versorgt. Als Elektrolyt wurde 30 %ige Kalilauge benutzt. Der Versuch fand bei 80°C und Atmosphärendruck statt. Mit einer elektronischen Unterbrecherschaltung konnte sowohl die reine Überspannung bzw. das Potential (RHE) als auch der ohmsche Spannungsabfall (IR) zwischen der Spitze der Luggin-Kappilare und der aktiven Zone der Diffusionselektrode gemessen werden.

Bei einem Strom von 1 Ampere betrug das Potential (RHE) - 903 mV und der IR-Anteil 18 mV.

Bei der unbeschichteten Vergleichsprobe betrug das Potential (RHE) bei gleichem Strom - 900 mV und der IR-Anteil 29 mV.
Die Beschichtung wies nach einer Versuchsdauer von ca. 46 Stunden keine erkennbaren Veränderungen auf. Die Kathode wurde dabei mit bis zu 6 Ampere bei 80°C und 26 bar Gesamtdruck belastet.
Wie die Messung zeigt, ist durch die Beschichtung mit dieser Kationenaustauschermembran kein zusätzlicher Spannungsabfall (IR-Anteil) feststellbar. Auch der Transport des zur Reaktion nötigen Wassers wird durch die Beschichtung nicht merklich behindert:

O₂ + 2 H₂O + 4 e → 4 OH⁻

Nach allgemein vorherrschender Meinung sollte der Transport von OH⁻ durch einen Kationenaustauschermembran nicht möglich sein. Wie das Beispiel zeigt, werden gute Ergebnisse erhalten, wenn die Kationenaustauschermembran dünn, und die Laugenkonzentration hoch ist.

Die obigen Ergebnisse weisen sowohl auf eine Verbesserung der Überspannung als auch auf eine Verbesserung des IR-Anteils durch die Ionenaustauschermembran hin.

## Patentansprüche

1. Elektrochemische Zelle umfassend ein Gehäuse, in dem zwei, aktive Katalysatorpartikel enthaltende Diffusionselektroden angeordnet sind, auf deren Rückseiten jeweils ein zusammenhängender Raum für ein Gas vorgesehen ist und zwischen den Diffusionselektroden ein Raum für einen flüssigen Elektrolyten, wobei zwischen den Diffusionselektroden mindestens eine Ionenaustauschermembran unmittelbar vor mindestens einer der Diffusionselektroden angeordnet ist, und wobei als Ionenaustauschermembran ein sulfoniertes Polyetherketon oder ein homogener Blend, bestehend aus sulfoniertem Polyetherketon und einen Polysulfon eingesetzt ist und daß die lonenaustauschermembran ca. 10 - 20 µm dick ist.

2. Elektrochemische Zelle nach Anspruch 1, **dadurch gekennzeichnet, daß** die Ionenaustauschermembran fest mit einer der Diffusionselektroden verbunden ist.

3. Elektrochemische Zelle nach Anspruch 1, **dadurch gekennzeichnet, daß** die Ionenaustauschermembran die aktiven Katalysatorpartikel umschließt.

4. Elektrochemische Zelle nach Anspruch 1, **dadurch gekennzeichnet, daß** der Elektrolyt alkalisch ist.

5. Elektrochemische Zelle nach Anspruch 1, **dadurch gekennzeichnet, daß** die Kationenaustauschermembran mit einer sauerstoffverzehrenden Diffusionselektrode verbunden ist.

6. Elektrochemische Zelle nach Anspruch 4, **dadurch gekennzeichnet, daß** die Diffusionselektrode silberhaltig ist.

7. Elektrochemische Zelle nach Anspruch 1, **dadurch gekennzeichnet, daß** die Ionenaustauschermembran mit einer wasserstofferzeugenden Diffusionselektrode verbunden ist.

8. Elektrochemische Zelle nach Anspruch 1, **dadurch gekennzeichnet, daß** die lonenaustauschermembran mit einer sauerstofferzeugenden Diffusionselektrode verbunden ist.

## Claims

1. An electrochemical cell comprising a housing in which two diffusion electrodes are arranged which contain active catalyst particles and at whose rears in each case a contiguous compartment for a gas is provided, a compartment for a liquid electrolyte being provided between the diffusion electrodes, wherein, between the diffusion electrodes, at least one ion exchanger membrane is arranged directly in front of at least one of the diffusion electrodes, and wherein the ion exchanger membrane used is a sulfonated polyetherketone or a homogeneous blend comprising sulfonated polyetherketone and a polysulfone, and wherein the ion exchanger membrane is 10 - 20 µm thick.

2. The electrochemical cell as claimed in claim 1, **characterized in that** the ion exchanger membrane is permanently joined to one of the diffusion electrodes.

3. The electrochemical cell as claimed in claim 1, **characterized in that** the ion exchanger membrane encloses the active catalyst particles.

4. The electrochemical cell as claimed in claim 1, **characterized in that** the electrolyte is alkaline.

5. The electrochemical cell as claimed in claim 1, **characterized in that** the cation exchanger membrane is joined to an oxygen-consuming diffusion electrode.

6. The electrochemical cell as claimed in claim 4, **characterized in that** the diffusion electrode contains silver.

7. The electrochemical cell as claimed in claim 1, **characterized in that** the ion exchanger membrane is joined to a hydrogen-generating diffusion electrode.

8. The electrochemical cell as claimed in claim 1, **characterized in that** the ion exchanger membrane is joined to an oxygen-generating diffusion electrode.

## Revendications

1. Cellule électrochimique comprenant un boîtier, dans lequel deux électrodes à diffusion contenant des particules actives de catalyseur, sont disposées, sur la face arrière desquelles est prévu chaque fois, un espace adjacent pour un gaz et entre les électrodes à diffusion, un espace pour l'électrolyte liquide, où entre les électrodes à diffusion, est disposée au moins une membrane échangeuse d'ions directement devant au moins l'une des électrodes à diffusion, et où l'on met en oeuvre comme membrane échangeuse d'ions, une polyéthercétone sulfonée ou un mélange homogène, consistant en une polyéthercétone sulfonée et une polysulfone, et où la membrane échangeuse d'ions a une épaisseur d'environ 10-20 µm.

2. Cellule électrochimique selon la revendication 1, **caractérisée en ce que** la membrane échangeuse d'ions est liée de manière fixe à l'une des électrodes à diffusion.

3. Cellule électrochimique selon la revendication 1, **caractérisée en ce que** la membrane échangeuse d'ions renferme les particules actives de catalyseur.

4. Cellule électrochimique selon la revendication 1, **caractérisée en ce que** l'électrolyte est alcalin.

5. Cellule électrochimique selon la revendication 1, **caractérisée en ce que** la membrane échangeuse de cations est reliée à une électrode à diffusion consommant de l'oxygène.

6. Cellule électrochimique selon la revendication 4, **caractérisée en ce que** l'électrode à diffusion contient de l'argent.

7. Cellule électrochimique selon la revendication 1, **caractérisée en ce que** la membrane échangeuse d'ions est reliée à une électrode à diffusion produisant de l'hydrogène.

8. Cellule électrochimique selon la revendication 1, **caractérisée en ce que** la membrane échangeuse d'ions est reliée à une électrode à diffusion produisant de l'oxygène.
